# DEMANDE DE BREVET EUROPEEN

(11) **EP 4 488 602 A1**
(43) Date de publication de la demande: **08.01.2025**
(21) Numéro de dépôt: 24186199.6
(22) Date de dépôt: 03.07.2024
(51) Int. Cl.: F25B 43/00

(54) **ACCUMULATEUR POUR UN CIRCUIT DE CLIMATISATION**

(30) Priorité: 07.07.2023 FR 2307250
(71) Demandeur: Hutchinson Fluid Management Systems, Inc., Auburn Hills, MI 48326 (US)
(72) Inventeur: BILLA, Manoj, Farmington Hills, 48335 (US); BLONDELL, Daniel, St Clair Shores, 48080 (US); FISK, John, Edon, 43518 (US)
(74) Mandataire: Gevers & Orès

(57) **Abrégé**

L'invention concerne un accumulateur (8) comprenant :
- une enceinte (9) s'étendant autour et le long d'un premier axe (X1),
- un port d'entrée (11) d'un fluide frigorigène (F), et
- un port de sortie (12) de gaz frigorigène (G),
- un tube d'aspiration (13) de gaz frigorigène (G), et
- un déflecteur (28) monté dans l'enceinte (9), le déflecteur (28) comprenant une paroi déflectrice (29) ayant une forme générale de bol inversé ou de cloche centré sur un second axe (X2) parallèle au premier axe (X1) et définissant au moins une première cavité interne (35) dans laquelle est située l'entrée (20) du tube d'aspiration (13), la paroi déflectrice (29) présentant en outre un premier passage (33) du tube d'aspiration (13),
le déflecteur (28) comprenant en outre une paroi de filtration (36) fermant la première cavité interne (35) et présentant un second passage (36a) du tube d'aspiration (13).

## Description

### Domaine technique de l'invention

L'invention concerne le domaine des accumulateurs pour les circuits de climatisation, en particulier de véhicules automobiles.

L'invention concerne en particulier le domaine des accumulateurs équipés d'un déflecteur.

### Arrière-plan technique

L'état de la technique est illustré par les documents JP-A-2019066137, US-B1-6167720 et EP-A1-0825399.

Les véhicules automobiles sont typiquement équipés d'un circuit de climatisation permettant de refroidir l'habitacle du véhicule.

Les circuits de climatisation sont des circuits fermés de circulation d'un fluide réfrigérant. Un circuit de climatisation comprend classiquement un compresseur, un condenseur ou un refroidisseur, un évaporateur et un accumulateur monté entre l'évaporateur et le compresseur. Le compresseur est relié au condenseur par un circuit haute pression et l'évaporateur est relié au compresseur par un circuit basse pression.

Le fluide réfrigérant est initialement à l'état gazeux et est comprimé au sein du compresseur puis refoulé vers le condenseur au travers du circuit haute pression. Puis, le fluide réfrigérant passe de l'état gazeux à l'état liquide dans le condenseur et est acheminé à l'état liquide jusqu'à l'évaporateur. Au sein de l'évaporateur, le réfrigérant passe de l'état liquide à l'état gazeux avant d'être acheminé au compresseur au travers du circuit basse pression. L'accumulateur a pour fonction primaire de séparer les phases liquide et gazeuse du fluide réfrigérant et d'accumuler la phase liquide de ce réfrigérant pour empêcher son retour dans le compresseur.

Le document US-B1-6 481 241 décrit un accumulateur comprenant une enceinte cylindrique s'étendant le long d'un premier axe entre une extrémité inférieure fermée et une extrémité supérieure fermée par un couvercle. L'accumulateur comprend en outre un port d'entrée du fluide frigorigène relié à l'évaporateur et un port de sortie du gaz relié au compresseur. Les ports d'entrée et de sortie sont typiquement ménagés sur le couvercle de l'accumulateur.

L'accumulateur comprend en outre un tube d'aspiration de gaz agencé dans l'enceinte et présentant une entrée de gaz située dans l'enceinte et une sortie de gaz reliée au port de sortie.

Afin de permettre la séparation des phases liquide et gazeuse du liquide frigorigène, l'accumulateur comprend en outre un déflecteur monté dans l'enceinte, entre le couvercle et l'entrée de gaz. Le déflecteur présente une paroi déflectrice présentant une forme de cloche et définissant une cavité interne dans laquelle est agencée l'entrée de gaz. Le déflecteur a pour fonction de favoriser l'écoulement de la phase liquide le long des parois de l'enceinte et de protéger l'entrée de gaz d'écoulement de ce liquide permettant ainsi au tube d'aspiration de ne collecter que le gaz frigorigène pour le renvoyer au compresseur.

Bien que performant, un tel accumulateur ne présente pas entière satisfaction. En effet, même si l'entrée de gaz du tube d'aspiration est bien protégée par le déflecteur permettant de limiter la quantité de liquide renvoyée au compresseur, le gaz aspiré par le tube d'aspiration peut tout de même être contaminé par des contaminants tels que des particules en suspension. L'accumulation de ces particules peut causer des dommages dans le tube d'aspiration voire dans le compresseur.

Il existe donc un besoin de fournir un accumulateur permettant de limiter la contamination de la phase gazeuse du fluide frigorigène dans le tube d'aspiration.

### Résumé de l'invention

A cet effet, l'invention propose un accumulateur pour un circuit de climatisation, en particulier d'un véhicule automobile, l'accumulateur comprenant :
- une enceinte s'étendant autour et le long d'un premier axe,
- un port d'entrée d'un fluide frigorigène, et
- un port de sortie de gaz frigorigène,
- un tube d'aspiration de gaz frigorigène agencé dans l'enceinte et présentant une entrée de gaz frigorigène située dans l'enceinte et une sortie de gaz frigorigène reliée au port de sortie et orientée vers le haut de l'enceinte, l'entrée et la sortie présentant chacune un axe s'étendant parallèlement au premier axe, et
- un déflecteur monté dans l'enceinte, le déflecteur comprenant une paroi déflectrice ayant une forme générale de bol inversé ou de cloche centré sur un second axe parallèle au premier axe et définissant au moins une première cavité interne dans laquelle est située l'entrée du tube d'aspiration, la paroi déflectrice présentant en outre un premier passage du tube d'aspiration.

L'accumulateur est remarquable en ce que le déflecteur comprend en outre une paroi de filtration fermant la première cavité interne et présentant un second passage du tube d'aspiration.

La paroi de filtration permet de filtrer le gaz frigorigène qui pénètre dans la première cavité avant d'être aspiré par le tube d'aspiration. Grâce à une telle paroi de filtration, le gaz frigorigène aspiré par le tube d'aspiration est ainsi exempt de contaminants limitant les dommages au sein du tube d'aspiration ou du compresseur.

Cette paroi de filtration est intégrée au déflecteur ce qui permet de réduire l'encombrement de l'accumulateur.

En outre, cette intégration de la paroi de filtration au déflecteur facilite l'assemblage de l'accumulateur.

L'invention peut comprendre une ou plusieurs des caractéristiques suivantes, prises isolément les unes des autres ou en combinaison les unes avec les autres :
- la paroi de filtration est reliée à la paroi déflectrice,
- la paroi de filtration comprend au moins un filtre et avantageusement une pluralité de filtres,
- le ou chaque filtre comprend un média filtrant comprenant des fibres,
- la paroi de filtration est annulaire et centrée sur le second axe, les filtres étant répartis autour du second axe,
- la paroi de filtration présente une forme semicirculaire centrée sur le second axe,
- la paroi déflectrice définit une seconde cavité interne adjacente à la première cavité interne, cette seconde cavité interne étant destinée à recevoir un sac déshydratant,
- la paroi déflectrice présente des orifices débouchant dans la seconde cavité interne,
- le déflecteur comprend une cloison axiale passant par le second axe et séparant les première et seconde cavités internes,
- le déflecteur comprend des nervures reliées à la paroi déflectrice et s'étendant radialement à partir d'un axe longitudinal parallèle au premier axe,
- le déflecteur comprend des ailettes régulièrement réparties autour du second axe,
- les ailettes sont agencées sur une périphérie externe de la paroi déflectrice et sont en appui sur l'enceinte,
- le tube d'aspiration est en J ou en U,
- le tube d'aspiration comprend un conduit interne sur lequel est ménagée la sortie de gaz frigorigène et un conduit externe sur lequel est ménagé l'entrée de gaz frigorigène, le conduit externe étant agencé coaxialement autour du conduit interne,
- le second axe est aligné avec le premier axe, ou est décalé par rapport au premier axe,
- l'accumulateur comprend un couvercle fixé sur une extrémité supérieure de l'enceinte, le port de sortie étant ménagé dans le couvercle et le déflecteur étant relié au couvercle,
- le déflecteur comprend un manchon s'étendant coaxialement autour du tube d'aspiration et relié au couvercle,
- le manchon s'étend axialement dans le premier passage,
- le déflecteur comprend des aubes situées sur une portion annulaire supérieure de la paroi déflectrice,

-- l'enceinte s'étend entre une extrémité supérieure et une extrémité inférieure, le port d'entrée et/ou de sortie étant située sur l'extrémité supérieure de l'enceinte,
-- l'accumulateur comprend un couvercle fixé sur l'extrémité supérieure de l'enceinte, le port de sortie et éventuellement le port d'entrée étant ménagé dans le couvercle,
-- le couvercle est assemblé avec le tube d'aspiration et le déflecteur. Ceci permet de faciliter l'assemblage de l'accumulateur,
-- la paroi déflectrice présente, en section longitudinale, une forme de U inversé.

L'invention concerne également un circuit de climatisation, en particulier pour un véhicule automobile. Le circuit de climatisation étant remarquable en ce qu'il comprend un accumulateur selon l'une quelconque des caractéristiques précédentes.

### Brève description des figures

D'autres caractéristiques et avantages ressortiront de la description qui suit de modes de réalisation non limitatifs de l'invention en référence aux dessins annexés sur lesquels :
la figure 1 est une représentation schématique d'un circuit de climatisation pour véhicule automobile,
la figure 2 est une représentation en coupe longitudinale d'un accumulateur selon un premier mode de réalisation de l'invention,
la figure 3 est une représentation en coupe longitudinale d'un tube d'aspiration selon une variante de réalisation,
la figure 4 est une vue en perspective de dessous du déflecteur relié au couvercle, pouvant équiper l'accumulateur de la figure 2,
la figure 5 est une représentation en coupe longitudinale d'un accumulateur selon un second mode de réalisation de l'invention,
la figure 6 est une vue en perspective de dessous du déflecteur relié au couvercle, équipant l'accumulateur de la figure 5,
la figure 7 est une représentation en coupe longitudinale d'un accumulateur selon un troisième mode de réalisation de l'invention,
la figure 8 est une vue en perspective de dessous du déflecteur relié au couvercle, équipant l'accumulateur de la figure 7,
la figure 9 est une représentation en coupe longitudinale d'un accumulateur selon un quatrième mode de réalisation de l'invention,
la figure 10 est une vue en perspective de dessous du déflecteur relié au couvercle, équipant l'accumulateur de la figure 9.

### Description détaillée de l'invention

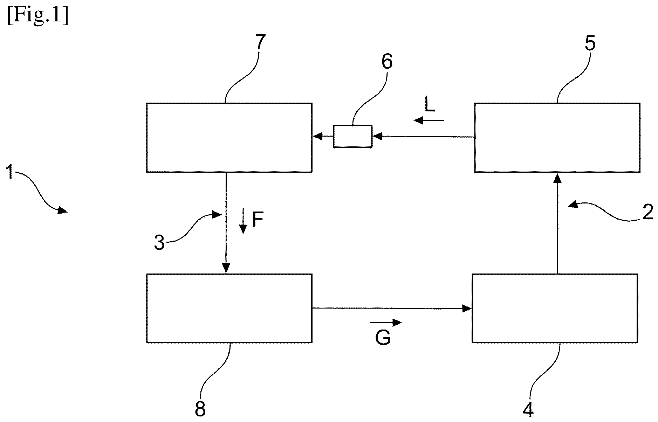

La figure 1 illustre un exemple d'un circuit de climatisation 1. Le circuit de climatisation 1 est en particulier pour un véhicule, par exemple de type automobile ou pour un aéronef. Le circuit de climatisation 1 peut être mis en oeuvre dans n'importe quel type d'installation nécessitant un circuit de climatisation.

Le circuit de climatisation 1 est un circuit fermé comprenant un circuit haute pression 2 et un circuit basse pression 3. Le circuit de climatisation 1 comprend en outre un compresseur 4, un condenseur 5, éventuellement un détenteur 6, un évaporateur 7 et un accumulateur 8 monté entre l'évaporateur 7 et le compresseur 4.

Le compresseur 4 est relié au condenseur par le circuit haute pression 2 et l'accumulateur 8 est relié à l'évaporateur 7 et au compresseur 4 par le circuit basse pression 3.

Un gaz frigorigène G est comprimé au sein du compresseur 4 puis refoulé vers le condenseur 5 au travers du circuit haute pression 2. Puis, le gaz frigorigène G est condensé dans le condenseur 5 pour former un liquide frigorigène L. Le liquide frigorigène L issu de la condensation du gaz frigorigène G est détendu dans le détendeur 6 puis acheminé jusqu'à l'évaporateur 7. Au sein de l'évaporateur 7, le liquide frigorigène L est en partie évaporé et un fluide frigorigène F comprenant un mélange de gaz frigorigène G et de liquide frigorigène L est acheminé jusqu'à l'accumulateur 8. Dans l'accumulateur 8, le liquide frigorigène L est séparé du gaz frigorigène G et le gaz frigorigène G est renvoyé au compresseur 4 au travers du circuit basse pression 3 tandis que le liquide frigorigène L est accumulé dans l'accumulateur 8.

Le gaz frigorigène G est de préférence un gaz carbonique, en particulier le gaz R744.

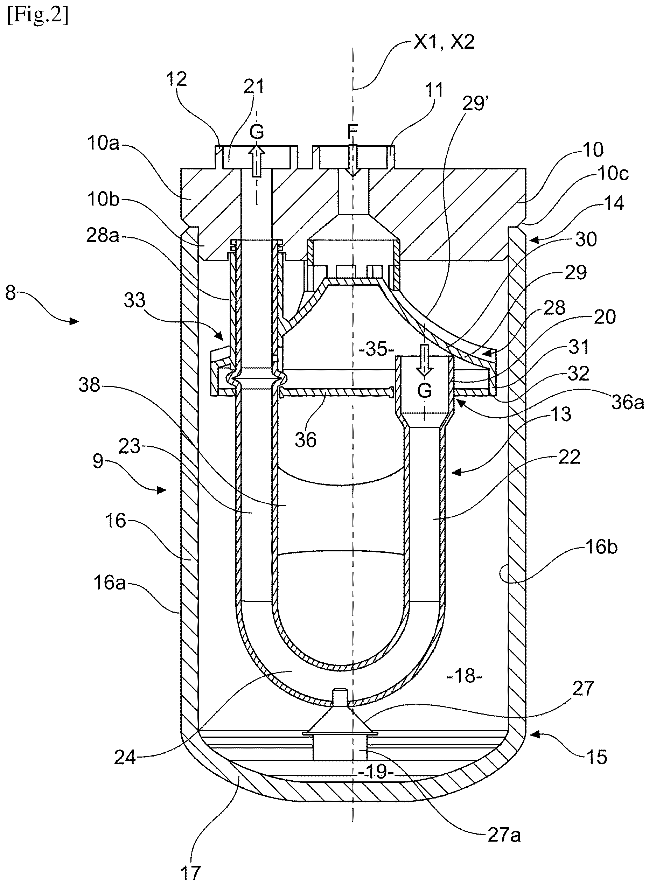

En référence par exemple à la figure 2 illustrant un premier mode de réalisation de l'accumulateur 8 selon l'invention, il comprend une enceinte 9, avantageusement un couvercle 10, un port d'entrée 11 du fluide frigorigène F, un port de sortie 12 du gaz frigorigène G, et un tube d'aspiration 13.

L'enceinte 9 s'étend autour et le long d'un premier axe X1.

Dans la suite de la description, les termes « inférieur » et « supérieur » sont entendus relativement par rapport au sens de circulation du fluide frigorigène F, et notamment du liquide frigorigène L, dans l'enceinte 9 le long du premier axe X1. Dans la figure 2, la phase liquide L circule de haut en bas.

Les termes « intérieur » et « extérieur » sont entendus par rapport à l'éloignement du premier axe X1 de l'enceinte 9 le long d'un axe radial perpendiculaire au premier axe X1.

Les termes « longitudinal » et « longitudinalement » sont entendus par rapport au premier axe X1.

L'enceinte 9 s'étend selon le premier axe X1 entre une extrémité supérieure 14 et une extrémité inférieure 15. L'enceinte 9 est avantageusement cylindrique. Les extrémités supérieure et inférieure 14, 15 de l'enceinte 9 sont reliées par une paroi cylindrique 16 centrée sur le premier axe X1. La paroi cylindrique 16 présente une face cylindrique externe 16a et une face cylindrique interne 16b.

L'extrémité inférieure 15 de l'enceinte 9 est fermée par une paroi de fond 17 opposée à l'extrémité supérieure 14.

L'enceinte 9 est creuse et comprend un espace interne 18 délimité par la paroi cylindrique 16 et un fond d'enceinte 19 définit par la paroi de fond 17. L'enceinte 9 est par exemple en matériau polymérique, composite ou métallique.

Le couvercle 10 est agencé sur l'extrémité supérieure 14 de l'enceinte 9. Le couvercle 10 est annulaire et centré sur le premier axe X1. Le couvercle 10 ferme l'extrémité supérieure 14 de l'enceinte 9. Le couvercle 10 est fixé à l'extrémité supérieure 14 de l'enceinte. Il est par exemple fixé par soudage. Le couvercle 10 comprend une portion annulaire supérieure 10a et une portion annulaire inférieure 10b reliées par un épaulement 10c. La portion annulaire inférieure 10b présente un diamètre inférieur au diamètre de la portion annulaire supérieure 10a. La portion annulaire inférieure 10b s'étend dans l'espace interne 18 de l'enceinte 9, et l'épaulement 10c est en appui sur l'extrémité supérieure 14 de l'enceinte 9. Une telle configuration du couvercle 10 permet de garantir l'étanchéité de l'enceinte 9.

Les ports d'entrée et de sortie 11, 12 sont avantageusement ménagés dans le couvercle 10. Les ports d'entrée et de sortie 11, 12 sont avantageusement axiaux. Ils présentent donc chacun un axe s'étendant parallèlement au premier axe X1. L'axe du port d'entrée ou de sortie 11, 12 peut être aligné ou décalé par rapport au premier axe X1.

Dans le mode de réalisation de la figure 2, l'axe du port d'entrée 11 est aligné avec le premier axe X1 et l'axe du port de sortie 12 est décalé par rapport au premier axe X1.

Le port d'entrée 11 débouche dans l'enceinte 9 et donc dans l'espace interne 18. Il est relié à l'évaporateur 7 par le circuit basse pression 3.

Le port de sortie 12 est relié au compresseur 4 par le circuit basse pression 3.

Le tube d'aspiration 13 est situé dans l'enceinte 9, donc dans l'espace interne 18 de l'enceinte 9. Le tube d'aspiration 13 comprend une entrée 20 de gaz G et une sortie 21 de gaz frigorigène G reliée au port de sortie 12 de l'accumulateur 8. Préférentiellement, la sortie 21 du tube d'aspiration 13 s'étend dans le port de sortie 12. Le port de sortie 12 et la sortie 21 du tube d'aspiration 13 sont coaxiaux. La sortie 21 présente ainsi un axe parallèle au premier axe X1. La sortie 21 de gaz frigorigène G est orientée vers le haut de l'enceinte 9.

L'entrée 20 de gaz du tube d'aspiration 13 est située dans l'enceinte 9, donc dans l'espace interne 18. L'entrée 20 de gaz est avantageusement axiale et présente ainsi un axe s'étendant parallèlement au premier axe X1. L'entrée 20 présente avantageusement une forme évasée en direction de l'extrémité supérieure 14 de l'enceinte 9. Ceci permet de favoriser le passage du gaz G dans le tube d'aspiration 13.

Selon le mode de réalisation illustré sur la figure 2, le tube d'aspiration 13 est en U ou en J. Selon ce mode, le tube d'aspiration 13 comprend un premier conduit 22 relié à l'entrée 20, un second conduit 23 relié à la sortie 21 et un coude 24 reliant les premier et second conduits 22, 23 entre eux. Les premier et second conduits 22, 23 et le coude 24 présentent un diamètre interne par exemple inférieur aux diamètres internes des entrées et sortie 20, 21 du tube d'aspiration 13.

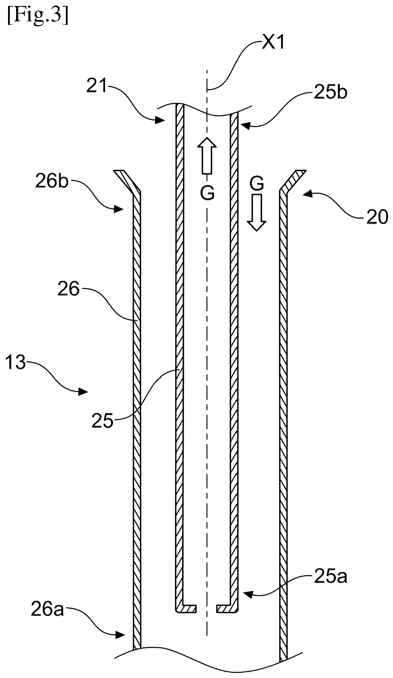

Selon une variante de réalisation du tube d'aspiration 13 illustrée sur la figure 3, le tube d'aspiration 13 est de type coaxial. Il comprend un conduit interne 25 avantageusement centré sur le premier axe X1 et un conduit externe 26 agencé coaxialement autour du conduit interne 25.

Le conduit externe 26 s'étend axialement entre une extrémité inférieure 26a et une extrémité supérieure 26b. L'extrémité supérieure 26b est située axialement entre le couvercle 10 et l'extrémité inférieure 15 de l'enceinte 9. L'entrée 20 est ménagée sur le conduit externe 26, au niveau de son extrémité supérieure 26b.

Le conduit interne 25 s'étend axialement entre une extrémité axiale inférieure 25a et une extrémité axiale supérieure 25b traversant le port de sortie 12. Les extrémités axiales inférieures et supérieures 25a, 25b du conduit interne 25 sont ouvertes afin de permettre l'entrée et la sortie du gaz frigorigène G. La sortie 21 est ménagée sur le conduit externe 26, en particulier au niveau de son extrémité axiale supérieure 25b.

Des particules d'huile en suspension peuvent être mélangées au gaz frigorigène G. A cet effet, le tube d'aspiration 13 peut comprendre un orifice 13a pour la récupération et la circulation d'huile dans le tube d'aspiration. L'orifice 13a est ménagé dans le coude 24 ou dans l'extrémité inférieure 26a du conduit externe 26.

En outre, l'accumulateur 8 comprend avantageusement un dispositif de filtration 27 d'huile relié au tube d'aspiration 13 et au compresseur 4. Le dispositif de filtration 27 est situé dans l'espace interne 18 de l'enceinte 9 à l'opposé de la première extrémité 14 de l'enceinte 9. Le dispositif de filtration 27 est relié au tube d'aspiration 13 par un moyen de fixation tel qu'un collier de serrage ou par vissage.

Le dispositif de filtration 27 comprend un filtre d'huile 27a d'huile permettant de filtrer l'huile avant sa circulation dans le tube d'aspiration 13. L'huile présente dans le fond d'enceinte 19 et mélangée au liquide réfrigérant L est ainsi aspirée par le gaz réfrigérant G circulant dans le tube d'aspiration 13 via l'orifice 13a pour être renvoyé au compresseur 4. Ceci permet de maintenir un taux de lubrification optimal du gaz réfrigérant G. L'accumulateur 8 comprend en outre un déflecteur 28. Le déflecteur 28 est monté dans l'enceinte 8, donc dans l'espace interne 18. Le déflecteur 28 est agencé axialement entre le couvercle 10 et l'entrée 20 de gaz frigorigène G du tube d'aspiration 20. Le déflecteur 28 permet de dévier l'écoulement du fluide frigorigène F vers la face interne 16b de la paroi cylindrique 16 de l'enceinte 9. Ceci permet de protéger l'entrée 20 de gaz du tube d'aspiration 13 de la phase liquide pour empêcher le retour de cette phase liquide dans le compresseur 4. Le déflecteur 28 favorise ainsi la séparation des phases liquide et gazeuse du fluide frigorigène F.

Le déflecteur 28 présente une forme de bol inversé, de cloche, ou encore de dôme centré sur un second axe X2. Le déflecteur 28 présente ainsi, en section longitudinale, une forme générale de U inversé.

Le second axe X2 est parallèle au premier axe X1. Le second axe X2 peut être décalé par rapport premier axe X1 ou être aligné avec le premier axe X1 comme visible sur la figure 2. L'alignement des premier et second axes X1, X2 favorise un écoulement uniforme du fluide frigorigène F autour du déflecteur 2.

Le déflecteur 28 comprend une paroi déflectrice 29. La paroi déflectrice 29 présente une forme de U inversé, de bol inversé, de cloche, ou encore de dôme centré sur le second axe X2. La paroi déflectrice 29 est par exemple en matériau métallique tel qu'un acier inoxydable ou en matériau polymérique.

Le déflecteur 28 est relié au couvercle 10 et au tube d'aspiration 13. Ils sont généralement préassemblés afin de faciliter l'assemblage et la maintenance de l'accumulateur 8.

La paroi déflectrice 29 comprend une portion annulaire supérieure 30 centrée sur le second axe X2 et une portion annulaire inférieure 31 s'étendant autour et le long du second axe X2 vers l'extrémité inférieure 15 de l'enceinte 9 à partir de la portion annulaire supérieure 30.

La portion annulaire supérieure 30 peut être tronconique comme illustré sur la figure 2 ou circulaire. La portion annulaire supérieure 30 est fixée au couvercle 10.

Selon ce mode de réalisation, la paroi déflectrice 29 présente des aubes 29' régulièrement réparties autour du second axe X2. Les aubes 29' sont situées par exemple sur la portion annulaire supérieure 30 de la paroi déflectrice 29. Elles permettent de favoriser la séparation des phases gazeuse et liquide du fluide réfrigérant F dans l'enceinte 9. Les aubes 29' peuvent s'étendre jusqu'à la portion annulaire inférieure 31. Préférentiellement, les aubes 29' s'étendent en spirale sur la paroi déflectrice 29.

La portion annulaire inférieure 31 présente une extrémité inférieure 32 annulaire centrée sur le second axe X2.

Sur le mode de réalisation de la figure 2, la portion annulaire inférieure 31 est appui sur la face interne 16b de l'enceinte 9.

Le déflecteur 28 comprend avantageusement un manchon 28a s'étendant coaxialement autour du tube d'aspiration 13 et relié au couvercle 10. Le manchon 28a s'étend axialement dans le premier passage 33.

Le déflecteur 28 comprend avantageusement un premier passage 33 du tube d'aspiration 13. Le premier passage 33 est aligné axialement avec le port de sortie 12. Le premier passage 33 peut ainsi être centré sur le second axe X2, en particulier lorsque le tube d'aspiration 13 est de type coaxial ou décalé axialement par rapport au second axe X2 comme illustré sur la figure 2. Le premier passage 33 est ménagé dans la portion supérieure 33 de la paroi déflectrice 29.

Le déflecteur 28 comprend en outre au moins une première cavité interne 35 dans laquelle est située l'entrée de gaz 20. La première cavité interne 35 est délimitée par la paroi déflectrice 29.

Selon l'invention, le déflecteur 28 comprend en outre une paroi de filtration 36 qui ferme la première cavité interne 35.

La paroi de filtration 36 est reliée à la paroi déflectrice 29 du déflecteur 28. Grâce à une telle caractéristique, l'encombrement de l'accumulateur 8 est réduit puisque la paroi de filtration 36 est directement intégrée au déflecteur 28.

En particulier, la paroi de filtration 36 est reliée à la portion inférieure 31 de cette paroi déflectrice 29. Selon encore un exemple, la paroi de filtration 36 est fixée à l'extrémité inférieure 32 de la portion inférieure 31 du déflecteur 28.

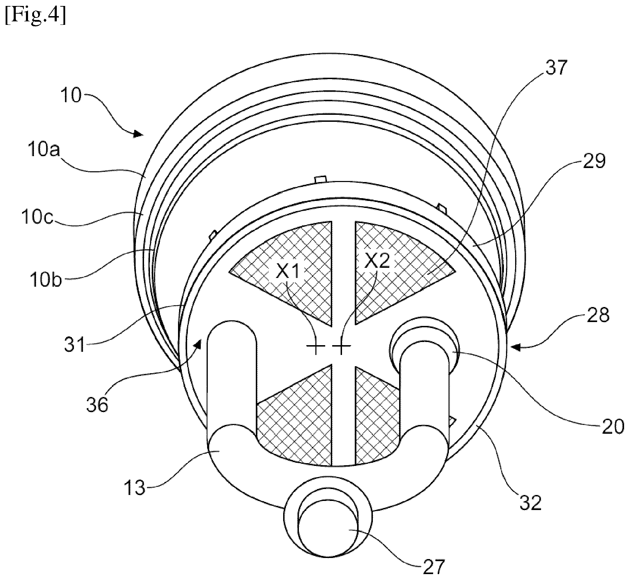

Comme mieux visible sur la figure 4, la paroi de filtration 36 comprend au moins un filtre 37 et avantageusement une pluralité de filtres 37. Avantageusement, la paroi de filtration 36 comprend entre un et dix filtres 37, préférentiellement entre quatre et six filtres 37.

Chaque filtre 37 comprend un média filtrant. Chaque média filtrant comprend des fibres et éventuellement une matrice dans laquelle les fibres sont noyées. Les fibres sont par exemple choisies parmi les fibres métalliques, de carbone, de polyester, de polyamide, de verre ou un mélange de celles-ci. Les fibres présentent un diamètre compris entre 0,01 mm et 1 mm et une longueur par exemple comprise entre 0,1 mm et 10 mm. Les fibres sont par exemple thermoliées ou tressées ou tissées.

La matrice est par exemple une matrice polymérique choisi parmi les polyéoléfines telles qu'un polyéthylène ou un polypropylène, les polyamides, les polymères fluorés.

Chaque filtre 37 est perméable aux gaz. Chaque filtre 37 présente ainsi des pores présentant par exemple une taille comprise entre 0,1 µm et 100 µm, préférentiellement entre 80 µm et 100 µm. Chaque filtre 37 présente une forme sensiblement polygonale par exemple triangulaire ou trapézoïdale. Dans le mode de réalisation de la figure 2, chaque filtre 37 présente une forme triangulaire.

Selon ce mode de réalisation, la paroi de filtration 36 est annulaire et centrée sur le second axe X2. Selon ce mode de réalisation, les filtres 37 sont répartis autour du second axe X2 et sont en particulier au nombre de quatre.

La paroi de filtration 36 est plane.

La paroi de filtration 36 comprend en outre un second passage 36a du tube d'aspiration 13 pour permettre le passage de l'entrée 20 de gaz du tube d'aspiration 13 dans la cavité interne 35.

La paroi de filtration 36 est ainsi perméable aux gaz afin d'autoriser le passage du gaz frigorigène G dans le tube d'aspiration 13 tout en filtrant les contaminants telles que des particules contaminantes. Le gaz frigorigène G aspiré par le tube d'aspiration 13 est ainsi exempt de contaminants limitant les dommages au sein du tube d'aspiration 13 ou du compresseur 4.

Afin de limiter encore le retour de la phase liquide du fluide frigorigène dans le compresseur 4, l'accumulateur 8 comprend en outre un sac déshydratant 38 relié au tube d'aspiration 13. Le sac déshydratant 38 comprend par exemple un contenant 38a et un matériau déshydratant agencé dans le contenant 38a.

Le contenant 38a est relié au tube d'aspiration 13 par un moyen de fixation 38b tel qu'un collier de serrage. Le contenant 38a peut être relié au coude 24 ou au second conduit 23 du tube d'aspiration 13 par exemple ou au conduit externe 26 du tube d'aspiration 13. Le contenant 38a peut également être situé entre les premier et second conduits 22, 23.

Le matériau déshydratant comprend par exemple un gel ou des billes. Le matériau déshydratant comprend par exemple de la silice ou de l'argile.

De manière préférée et non illustrée, l'accumulateur 8 comprend en outre un échangeur de chaleur interne. L'échangeur de chaleur interne est situé dans l'espace interne 18 de l'enceinte 9.

Des modes de réalisation avantageux de l'accumulateur 8 vont maintenant être décrits. Seules les différences sont décrites pour chacun des modes de réalisation suivants. Sans indication contraire, l'ensemble de la description du mode de réalisation de la figure 2 s'applique.

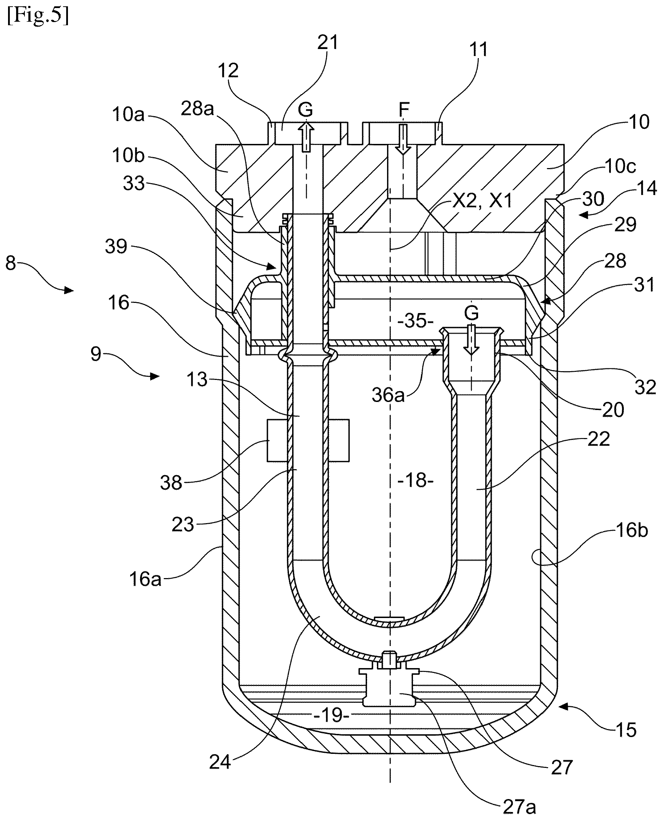

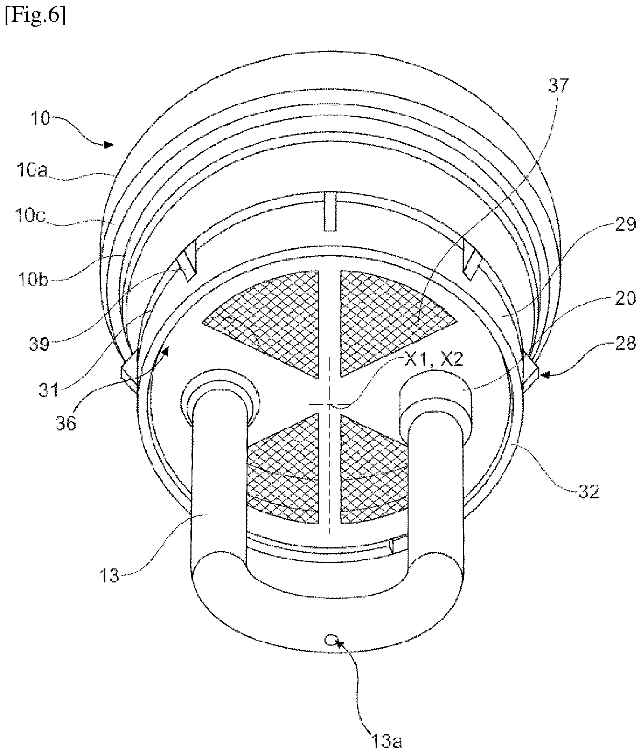

Les figures 5 et 6 illustrent un second mode de réalisation de l'accumulateur 8. Dans ce mode de réalisation, le déflecteur 28 est centré sur le premier axe X1.

Selon ce second mode de réalisation, le déflecteur 28 comprend en outre des ailettes 39 régulièrement réparties autour du second axe X2. Les ailettes 39 sont situées sur une périphérique externe la paroi déflectrice 29, en particulier sur la portion inférieure 31 de la paroi déflectrice 29. Les ailettes 39 sont en appui sur l'enceinte 9. Les ailettes 39 s'étendent par exemple radialement de cette paroi déflectrice 29 et coopèrent de manière étanche avec la paroi cylindrique 16 de l'enceinte 9. Les ailettes 39 présentent par exemple une forme sensiblement triangulaire.

Le fluide frigorigène F peut s'écouler entre les ailettes 39. Les ailettes 39 permettent ainsi de ralentir l'écoulement du fluide frigorigène F dans l'enceinte 9 afin de favoriser la séparation des phases liquide et gazeuse de ce fluide frigorigène F.

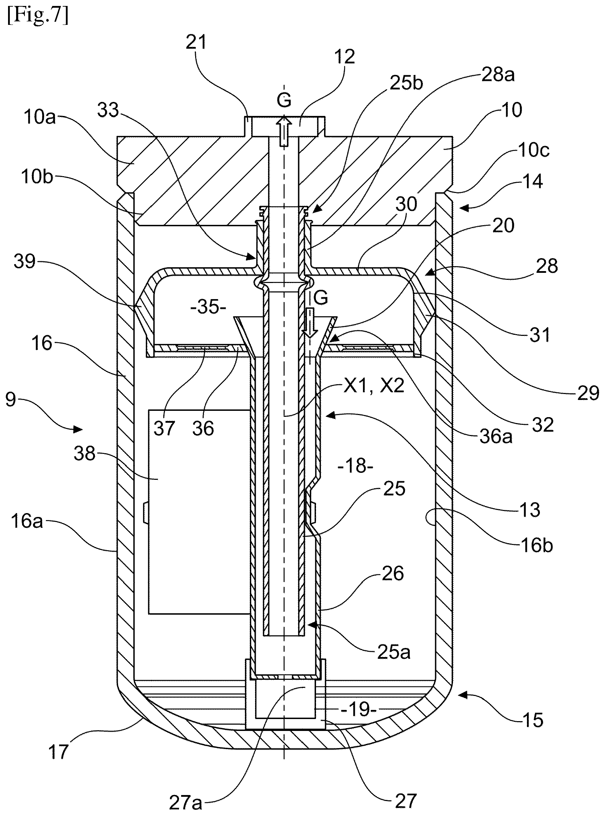

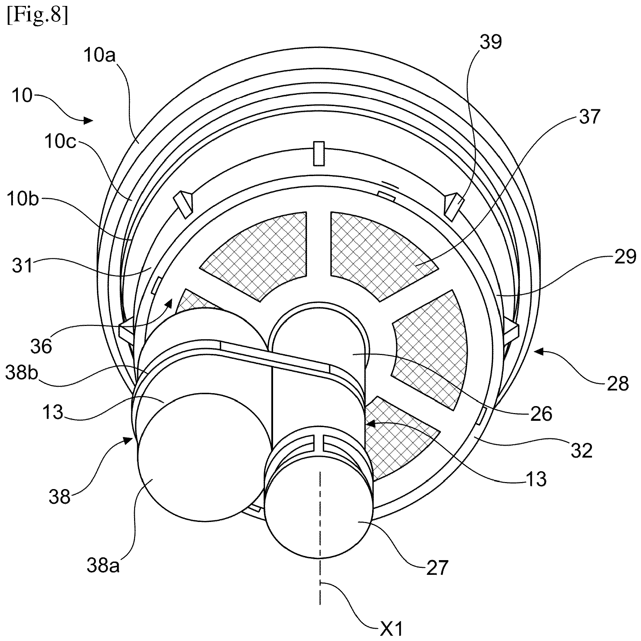

Les figures 7 et 8 illustrent un troisième mode de réalisation qui est une variante de réalisation du mode de réalisation des figures 5 et 6. Dans cette variante, le tube d'aspiration 13 est de type coaxial tel que décrit en référence à la figure 3.

Selon cette variante, les filtres 37 sont régulièrement répartis autour du second axe X2. Les filtres 37 sont par exemple au nombre de six et présentent une forme sensiblement trapézoïdale.

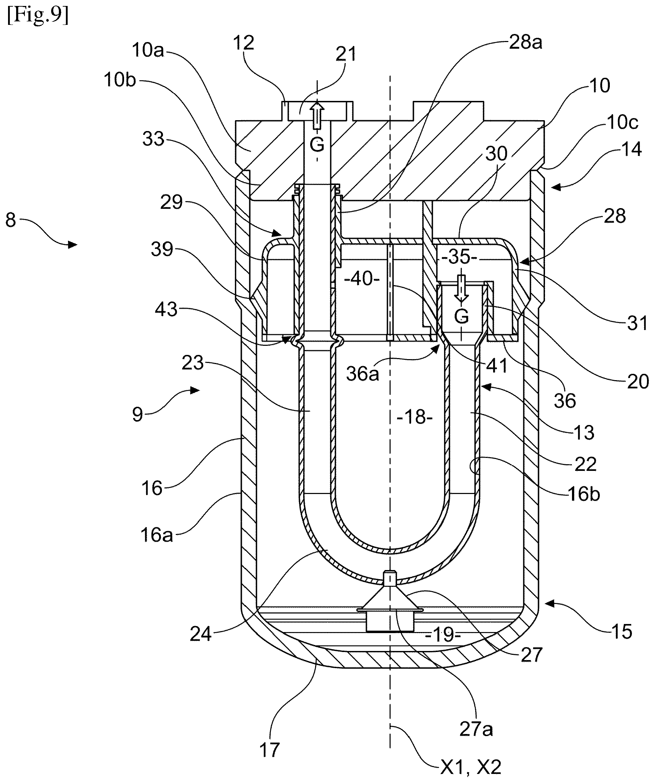

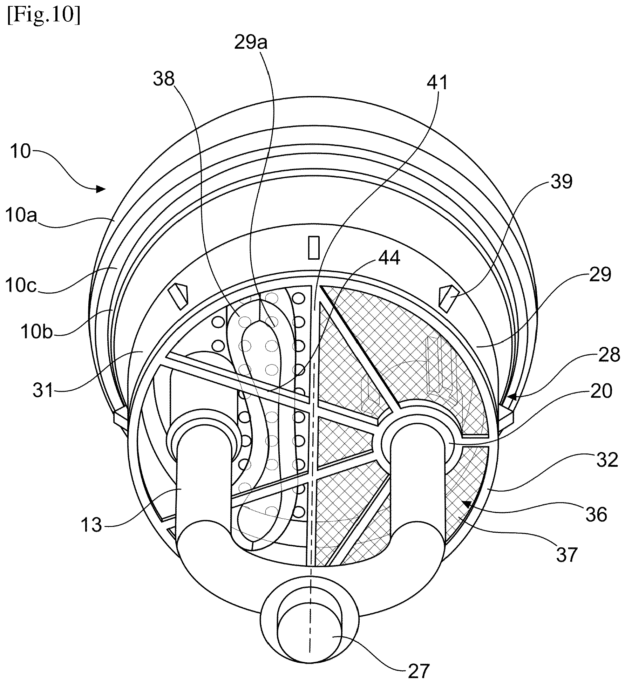

Les figures 9 et 10 illustrent un quatrième mode de réalisation de l'accumulateur 8. Ce troisième mode diffère du second mode en ce que le déflecteur 28 comprend une seconde cavité interne 40. Le sac déshydratant 38 est agencé dans la seconde cavité 42.

Les première et seconde cavité internes 35, 40 sont adjacentes. Elles sont séparées par une cloison axiale 41 passant par le second axe X2. La cloison axiale 41 s'étend axialement à partir de la paroi déflectrice 29 vers l'extrémité inférieure 15 de l'enceinte 9.

Selon ce mode de réalisation, la paroi de filtration 36 présente une forme générale semicirculaire centrée sur le second axe X2. Par centrée sur le second axe X2, il est entendu que le centre du cercle dans lequel s'inscrit la paroi de filtration 36 semicirculaire passe par le second axe X2.

Selon ce mode de réalisation, la paroi déflectrice 29 présente des trous 29a débouchant dans la seconde cavité 40. Les trous 29a sont régulièrement réparties sur la paroi déflectrice 29. Ils présentent une forme générale circulaire ou elliptique et présentent par exemple un diamètre compris entre 0,01 mm et 1 mm.

La paroi déflectrice 29 présente en outre un troisième passage 43 du tube d'aspiration 13, en particulier du second conduit 23. Le troisième passage 43 est aligné axialement avec le premier passage 33.

Selon ce mode de réalisation, le déflecteur 28 comprend en outre des nervures 44 reliées à la paroi déflectrice 29 en particulier à l'extrémité inférieure 32 de la paroi déflectrice 29 et fermant la seconde cavité interne 40. Les nervures 44 s'étendent radialement par rapport à un axe longitudinal parallèle au premier axe X1. Les nervures 44 permettent de renforcer mécaniquement le déflecteur 28 et de maintenir le sac déshydratant dans la seconde cavité interne 40.

La variante de réalisation de la figure 3 peut également s'appliquer à ce quatrième mode de réalisation.

La paroi de filtration 36 de filtrer le gaz frigorigène G qui pénètre dans la première cavité 35 avant d'être aspirer par le tube d'aspiration 13. Grâce à une telle paroi de filtration 36, le gaz frigorigène G aspiré par le tube d'aspiration 13 est ainsi exempt de contaminants limitant les dommages au sein du tube d'aspiration 13 ou du compresseur 4.

Cette paroi de filtration 36 est intégrée au déflecteur 8 ce qui permet de réduire l'encombrement de l'accumulateur 8.

## Revendications

1. Accumulateur (8) pour un circuit de climatisation (1), en particulier d'un véhicule automobile, l'accumulateur (8) comprenant :
- une enceinte (9) s'étendant autour et le long d'un premier axe (X1),
- un port d'entrée (11) d'un fluide frigorigène (F), et
- un port de sortie (12) de gaz frigorigène (G),
- un tube d'aspiration (13) de gaz frigorigène (G) agencé dans l'enceinte (9) et présentant une entrée (20) de gaz frigorigène (G) située dans l'enceinte (9) et une sortie (21) de gaz frigorigène (G) reliée au port de sortie (12) et orientée vers le haut de l'enceinte (9), l'entrée (20) et la sortie (21) présentant chacune un axe s'étendant parallèlement au premier axe (X1), et
- un déflecteur (28) monté dans l'enceinte (9), le déflecteur (28) comprenant une paroi déflectrice (29) ayant une forme générale de bol inversé ou de cloche centré sur un second axe (X2) parallèle au premier axe (X1) et définissant au moins une première cavité interne (35) dans laquelle est située l'entrée (20) du tube d'aspiration (13), la paroi déflectrice (29) présentant en outre un premier passage (33) du tube d'aspiration (13),
**caractérisé en ce que** le déflecteur (28) comprend en outre une paroi de filtration (36) fermant la première cavité interne (35) et présentant un second passage (36a) du tube d'aspiration (13).

2. Accumulateur selon la revendication précédente, **caractérisé en ce que** la paroi de filtration (36) est reliée à la paroi déflectrice (29).

3. Accumulateur selon l'une des revendications 1 ou 2, **caractérisé en ce que** la paroi de filtration (36) comprend au moins un filtre (37) et avantageusement une pluralité de filtres (37).

4. Accumulateur selon la revendication précédente, **caractérisé en ce que** le ou chaque filtre (37) comprend un média filtrant comprenant des fibres.

5. Accumulateur selon l'une quelconque des revendications précédentes, **caractérisé en ce que** la paroi de filtration (36) est annulaire et centrée sur le second axe (X2), les filtres (37) étant répartis autour du second axe (X2).

6. Accumulateur selon l'une des revendications 1 à 4, **caractérisé en ce que** la paroi de filtration (36) présente une forme semicirculaire centrée sur le second axe (X2).

7. Accumulateur selon la revendication précédente, **caractérisé en ce que** la paroi déflectrice (29) définit une seconde cavité interne (40) adjacente à la première cavité interne (35), cette seconde cavité interne (40) étant destinée à recevoir un sac déshydratant (38).

8. Accumulateur selon la revendication précédente, **caractérisé en ce que** la paroi déflectrice (29) présente des orifices (42a) débouchant dans la seconde cavité interne (40).

9. Accumulateur selon l'une des revendications 7 à 8, **caractérisé en ce que** le déflecteur (28) comprend une cloison axiale (41) passant par le second axe (X2) et séparant les première et seconde cavités internes (35, 40).

10. Accumulateur selon l'une quelconque des revendications précédentes, **caractérisé en ce que** le déflecteur (28) comprend des nervures (44) reliées à la paroi déflectrice (29) et s'étendant radialement à partir d'un axe longitudinal parallèle au premier axe (X1) .

11. Accumulateur selon l'une quelconque des revendications précédentes, **caractérisé en ce que** le déflecteur (28) comprend des ailettes (39) régulièrement réparties autour du second axe (X2).

12. Accumulateur selon la revendication précédente, **caractérisé en ce que** les ailettes (39) sont agencées sur une périphérie externe de la paroi déflectrice (29) et sont en appui sur l'enceinte (9).

13. Accumulateur selon l'une quelconque des revendications précédentes, **caractérisé en ce que** le tube d'aspiration (13) est en J ou en U.

14. Accumulateur selon l'une quelconque des revendications 1 à 12, **caractérisé en ce que** le tube d'aspiration (13) comprend un conduit interne (25) sur lequel est ménagée la sortie (21) de gaz frigorigène (G) et un conduit externe (26) sur lequel est ménagé l'entrée (20) de gaz frigorigène (G), le conduit externe (26) étant agencé coaxialement autour du conduit interne (25).

15. Accumulateur selon l'une quelconque des revendications précédentes, **caractérisé en ce que** le second axe (X2) est aligné avec le premier axe (X1), ou est décalé par rapport au premier axe (X1).

16. Accumulateur selon l'une quelconque des revendications précédentes, **caractérisé en ce qu'**il comprend un couvercle (10) fixé sur une extrémité supérieure (14) de l'enceinte (9) , le port de sortie (12) étant ménagé dans le couvercle (10) et le déflecteur (28) étant relié au couvercle (10).

17. Accumulateur selon la revendication précédente, **caractérisé en ce que** le déflecteur (28) comprend un manchon (28a) s'étendant coaxialement autour du tube d'aspiration (13) et relié au couvercle (10).

18. Accumulateur selon la revendication précédente, **caractérisé en ce que** le manchon (28a) s'étend axialement dans le premier passage (33).

19. Accumulateur selon l'une quelconque des revendications précédentes, **caractérisé en ce que** le déflecteur (28) comprend des aubes (29') situées sur une portion annulaire supérieure (30) de la paroi déflectrice (29).

20. Circuit de climatisation (1), en particulier pour un véhicule automobile, **caractérisé en ce qu'**il comprend un accumulateur (8) selon l'une quelconque des revendications précédentes.
